# EUROPEAN PATENT SPECIFICATION

(11) **EP 4 016 303 B1**
(45) Date of publication and mention of the grant of the patent: **10.07.2024**
(21) Application number: 21198385.3
(22) Date of filing: 22.09.2021
(51) Int. Cl.: G06F 11/07, G06F 11/30, G06F 11/34, H04L 41/0631, H04L 43/065, H04L 43/0817, H04L 43/50

(54) **METHODS AND APPARATUS TO MONITOR TELEMETRY DATA ASSOCIATED WITH COMPUTING DEVICES**
VERFAHREN UND VORRICHTUNG ZUR ÜBERWACHUNG VON TELEMETRIEDATEN IN ZUSAMMENHANG MIT RECHENVORRICHTUNGEN
PROCÉDÉS ET APPAREIL PERMETTANT DE SURVEILLER LES DONNÉES DE TÉLÉMÉTRIE ASSOCIÉES À DES DISPOSITIFS DE CALCUL

(30) Priority: 21.12.2020 US 202017129607
(43) Date of publication of application: 22.06.2022
(73) Proprietor: INTEL Corporation, Santa Clara, CA 95054 (US)
(72) Inventor: TAYEB, Jamel, Hillsboro, 97006 (US); GLENDINNING, Duncan, Chandler, 85248 (US)
(74) Representative: Rummler, Felix

(56) References cited:
- WO-A1-2020/096639
- US-A1- 2016 204 992
- US-A1- 2018 212 821
- US-A1- 2020 241 999

## Description

### FIELD OF THE DISCLOSURE

This disclosure relates generally to monitoring telemetry data, and, more particularly, to methods and apparatus to monitor telemetry data associated with computing devices.

### BACKGROUND

Users of computing devices may report performance issues and/or other device problems to device manufacturers, service providers, etc., to aid in troubleshooting the issues/problems. Computing devices may also make such reports automatically, and include telemetry data with the reports. However, when a performance issue is reported by a user of a computing device, or the computing device itself automatically, the manufacturers/providers often do not have sufficient information (e.g., telemetry data) to recreate the complex environment in which the performance issue occurred.

US 2018/212821 discloses methods, systems, and storage media for telemetry adaptation. In an embodiment, a networking device may include a data collector agent module to receive measurement data from measurement sources according to an initial telemetry policy and to provide the measurement data to the one or more servers of the monitoring system. The networking device may include an anomaly detection module to receive measurement data from the data collector agent module, to detect an anomaly in the measurement data, and to provide an indication of the anomaly to the data collector agent module for the data collector agent module to provide a first modified telemetry policy for the measurement sources.

US 2016/0204992 discloses techniques and systems to improve computing device telemetry collection by automatic analysis and dynamic adjustment of telemetry collection rules. Certain implementations use a telemetry service to analyze telemetry messages and direct the adjusted rules at the client computing device, automatically and gradually refining telemetry collection as more relevant telemetry is received. Dynamic adjustments that can be made to the collection rules include, for example, changes to the collection frequency of telemetry messages, changes to the level of detail transmitted in the telemetry messages, and changes to the targets (e.g., applications, components, devices) from which to collect. WO 2020/096639 discloses monitoring telemetry data about micro-architectural events associated with code execution. US 2020/241999 teaches tracking metrics for graphics processing unit cycle utilization.

### SUMMARY OF INVENTION

The invention is defined by the appended independent claims. Advantageous, optional features of the invention are then set out in the appended dependent claims. In the following description, any embodiment referred to and not falling within the scope of the claims is merely an example useful to the understanding of the invention.

### BRIEF DESCRIPTION OF THE DRAWINGS

FIG. 1 is a block diagram illustrating system-level telemetry data collection in accordance with teachings of this disclosure, where the telemetry data of one or more computing devices is monitored and communicated to a backend server.
FIG. 2 is an illustration of the interaction between an example computing device and the backend server of FIG 1.
FIG. 3 is a block diagram of an example telemetry monitoring tool implemented by an example computing device of FIG. 1 in accordance with teachings of this disclosure.
FIGS. 4-6 are flowcharts representative of machine-readable instructions which may be executed to implement the telemetry monitoring tool of FIG 3.
FIG. 7 is a flowchart representative of backend recreation of the complex user environment using data from the example telemetry monitoring tool of FIG 3.
FIG. 8 is a block diagram of an example processing platform structured to execute the instructions of FIGS. 4-6 to implement the example telemetry monitoring tool of FIG. 3 and/or an example computing device of FIG. 1.
FIG. 9 is block diagram of an example software distribution platform to distribute software (e.g., software corresponding to the example computer readable instructions of FIGS. 4-6) to client devices such as consumers (e.g., for license, sale and/or use), retailers (e.g., for sale, re-sale, license, and/or sub-license), and/or original equipment manufacturers (OEMs) (e.g., for inclusion in products to be distributed to, for example, retailers and/or to direct buy customers).

The figures are not to scale. In general, the same reference numbers will be used throughout the drawing(s) and accompanying written description to refer to the same or like parts. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other.

Unless specifically stated otherwise, descriptors such as "first," "second," "third," etc. are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

### DETAILED DESCRIPTION

As noted above, users of computing devices may report performance issues and/or other device problems to device manufacturers, service providers, etc., to aid in troubleshooting the issues/problems. The computing devices may additionally or alternatively make such reports automatically, and include telemetry data with the reports. In either case, a performance issue or other problem (generally referred to as an "issue" herein) in the field is first detected, and then reported to appropriate contact and via the appropriate channel. Assuming a case is made to investigate the issue, resources are spent to reproduce and root cause the issue in the lab. However, reproduction and root causing may not be possible due to a lack of sufficient information (e.g., telemetry data) and the reported issue is merely classified as a sighting. Although techniques such as instrumentation or telemetry can be used to help detect field issues, they may not provide a holistic view of the system and/or account for interaction among the various components of the system.

In examples disclosed herein, a telemetry monitoring tool collects telemetry data upon the detection of an operational condition. Example implementations of the telemetry monitoring tool, which can be implemented in hardware, software, and/or a combination thereof, include a telemetry collector to collect a first set of telemetry data to form a telemetry data timeline and detect operational conditions, an actuator to collect a second set of telemetry data corresponding to a particular detected operational condition, an annotator to annotate the telemetry data timeline, a data reporter to report telemetry data from the telemetry collector and annotator, and a policy file updater to implement an updated policy file containing instructions to update the operation of the telemetry monitoring tool. By obtaining the second set of telemetry data along with the telemetry data timeline, complex execution contexts seen in the field can be reproduced.

Example disclosed herein allow device manufacturers and/or providers to collect improved telemetry data, enabling them to better understand operational conditions that occur in the field. Additionally, these device manufacturers and/or providers can use this better understanding to create products that minimize the impact of operational conditions in the field, which results in enhanced performance of overall systems. Furthermore, this tool can be licensed and implemented on several platforms allowing for licensed companies to better understand operational conditions that occur on their computing devices.

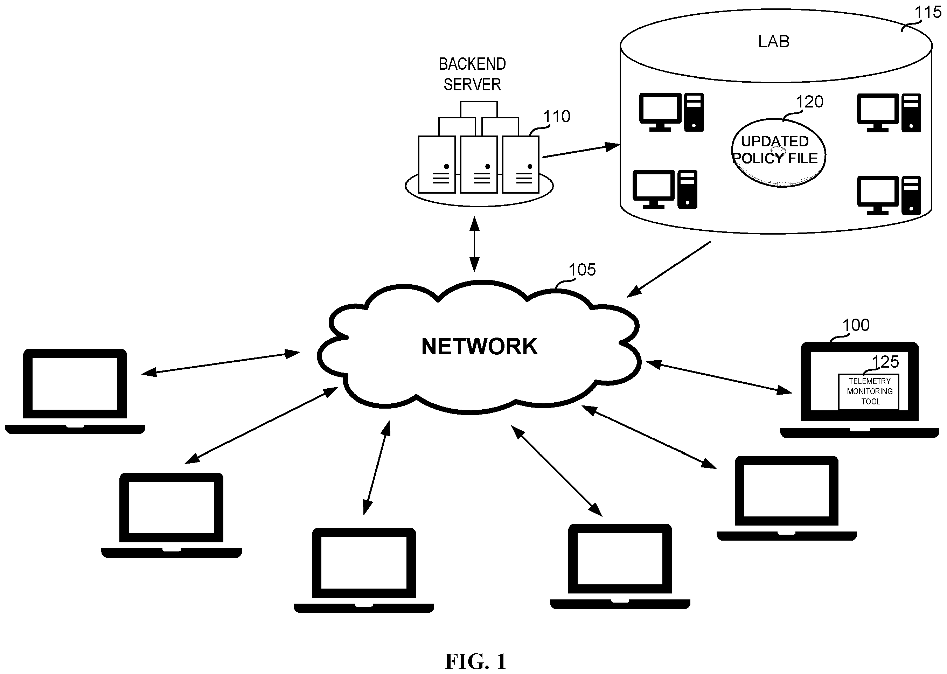

FIG. 1 is an example illustration of a system-level telemetry monitoring system in accordance with teachings of this disclosure. The example system of FIG. 1 contains multiple example client devices, such as example computing device 100. The example computing device 100 generates and collects telemetry data and is connected to an example network 105 to send data (such as the telemetry data) to and from data from an example backend server 110. The example backend server 110 is to communicate the telemetry data to an example lab environment 115, where the recorded telemetry data is analyzed. The example lab environment 115 generates updated instructions for an example telemetry monitoring tool 125, and those updated instructions are included in an updated example policy file 120. In this example, the updated example policy file 120 is then distributed through the example network 105 to the example computing device 100.

The example computing device 100 generates telemetry data (e.g. application data, system data, etc.) that can be monitored and collected. In the illustrated example, the computing device 100 communicates to the example backend server 110 through the example network 105. However, the example computing device 100 could alternatively communicate to the example backend server 110 directly. Furthermore, in some examples, the example computing device 100 may communicate directly to an example lab environment 115.

The example network 105 creates a pathway for client device data to be communicated to the example backend server 110. The example network 105 of the illustrated example of FIG. 1 is implemented by one or more web services, cloud services, virtual private networks (VPN), local area networks (LAN), Ethernet connections, the internet, and/or any other means for communicating or relaying data. In some examples, multiple client devices may use the example network 105 to communicate data to the example backend server 110. In some examples, multiple client devices may use any combination of networks to communicate data to the example backend server 110. The example backend server 110 receives data through the example network 105 from the example computing devices 100.

The example backend server 110 of the illustrated example of FIG. 1 is implemented by any memory, storage device and/or storage disc for storing data such as, for example, flash memory, magnetic media, optical media, solid state memory, hard drive(s), thumb drive(s), etc. Furthermore, the data stored in the example backend server 110 may be in any data format such as, for example, binary data, comma delimited data, tab delimited data, structured query language (SQL) structures, etc. While, in the illustrated example, the backend server 110 is illustrated as a single device, the example backend server 110 and/or any other data storage devices described herein may be implemented by any number and/or type(s) of memories. In the illustrated example of FIG. 1, the example backend server 110 stores telemetry data from client devices through the example network 105. In some examples, the example backend server 110 may receive data directly from an example computing device 100. Additionally, some examples may bypass or combine the example backend server 110 and/or the example lab environment 115.

The example lab environment 115 recreates the complex environment seen on an example computing device 100 by recreating the execution process of the example computing device before, during, and after the operational condition is detected. The example lab environment 115 performs root cause analysis using the data received at the example backend server 110. The example lab environment 115 also generates an example updated policy file 120 to improve data collection before, after, and in response to operational conditions and operational condition detection.

In the example system of FIG. 1, one or more of the computing devices, such as the computing device 100, include telemetry monitoring tools, such as an example telemetry monitoring tool 125 in the computing device 100, to collect two sets of telemetry data from client devices to be used in recreation of operational conditions experienced in the field. The example telemetry monitoring tool 125 collects two sets of data to be reported through an example network 105 to an example backend server 110. In this example, the first set of data is includes a continuous flow of system and application data and the second set of data, which is collected once an issue is detected, includes analysis data that is specific to the operational condition that was detected. Furthermore, the first set of telemetry data can also be referred to as primary telemetry data and the second set of telemetry data can also be referred to as secondary telemetry data. The example lab environment 115 then uses the data received at the example backend server 110 to recreate the complex environment seen in the field. The combination of the two data sets enables a lab environment to reproduce a timeline of events before and after the issue was detected, thus recreating the complex environment of the example computing device 100. The analysis performed in the example lab environment gives clients, providers, original equipment manufacturers (OEMs), independent software vendors (ISVs), and any other similar entity a better understanding of the complex environment that creates operational conditions. By giving providers the capabilities to better understand the issues that are occurring in the field, providers are then able to improve performance and scalability of their technologies.

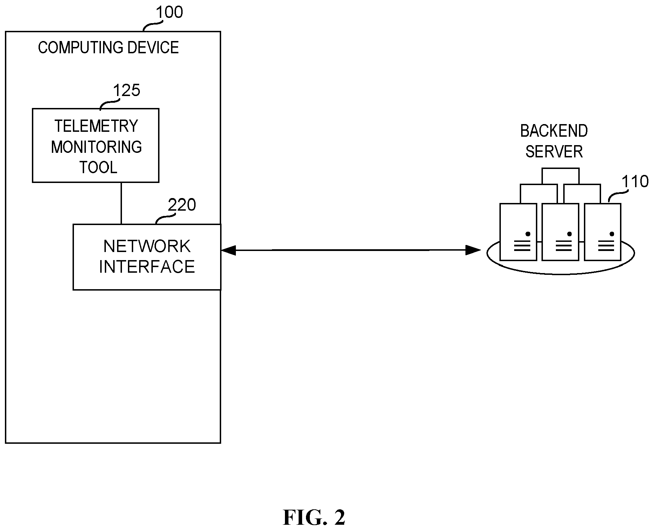

FIG. 2 is a block diagram further illustrating the relationship between the example computing device 100 and the example backend server 110. In this example, the example computing device 100 contains an example telemetry monitoring tool 125 and an example network interface 220. In this example, the example telemetry monitoring tool 125 uses the example network interface 220 of the example computing device 100 to report telemetry data to the example backend server 110. The telemetry data reported to the backend server includes a telemetry data timeline including system and application data and a second set of data including analysis data. In examples herein, the telemetry monitoring tool 125 uses the network interface 220 to receive policy file updates from the lab environment 115 and receive requests for telemetry data from the backend server 110. In some examples, the network interface could use used to communicate system data or profile data to a backend server 110. In some examples, the example telemetry monitoring tool 125 may contain its own interface to communicate data to the example backend server 110.

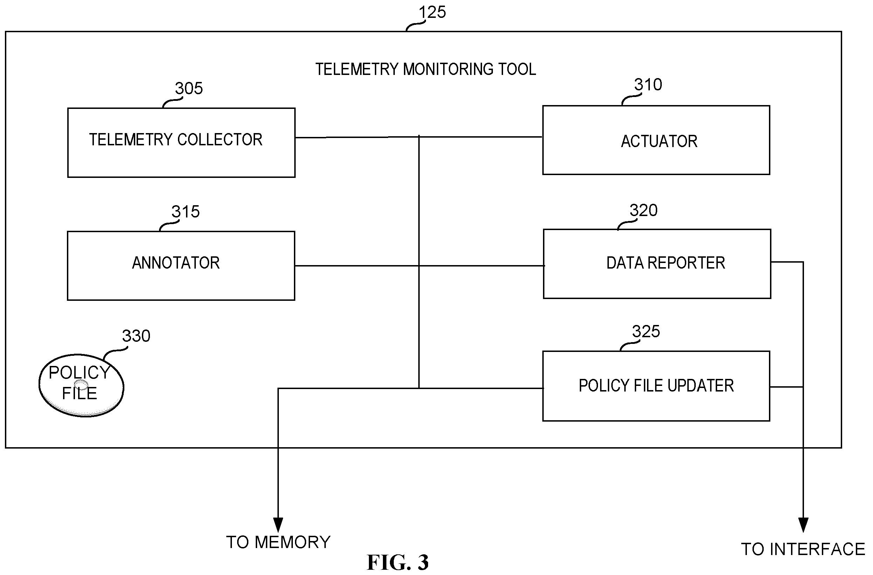

FIG. 3 is a block diagram of the example telemetry monitoring tool 125 in accordance with teachings of this disclosure. In the illustrated example, the telemetry monitoring tool 125 includes an example telemetry collector 305, an example actuator 310, an example annotator 315, an example data reporter 320, an example policy file updater 325 and a policy file 330. The example telemetry collector 305 collects a first set of telemetry data and outputs a trigger signal when an operational condition specified in the example policy file 330 is detected. The example actuator 310 collects a second set of telemetry data in response to the trigger signal output by the telemetry collector 305. The first set of telemetry data is annotated by the example annotator 315. The example data reporter 320 reports the two data sets to the example backend server 110.

In the illustrated example of FIG. 3, the telemetry collector 305 collects the first set of telemetry data to form a telemetry data timeline based on instructions within the example policy file 330. In this example, the first set of telemetry data includes time-series system and time-series application data. Time-series system data includes data from input devices (e.g. a mouse, a keyboard, etc.), output devices (e.g. printers, speakers, headphones, etc.), memory allocations, central processor unit (CPU) characteristics (e.g., temperature, clock rate, power usage, etc.) and/or any other measurable metrics of system operation in a chronological order. Time-series application data includes application runtime data, application execution paths and memory allocation data, and/or any other measurable metrics related to application execution. However, the first set of telemetry data could include any combination of time-series data. The telemetry collector 305 uses the data collected to form a telemetry data timeline. To form the telemetry data timeline, the telemetry collector combines the time-series system and application data into a chronological timeline (e.g., by timestamping the data based on a system clock). The resulting telemetry data timeline offers a chronological order of operations performed at the system and application level of a computing device in the field. In the illustrated example, the telemetry collector 305 also monitors the collected first set of telemetry data for the existence of an operational condition as defined in the policy file 330. If the telemetry collector 305 detects that an operational condition has occurred, the telemetry collector 305 outputs a trigger that indicates that the operational condition has been detected (e.g., the operational condition has occurred). In this example, the trigger is a signal, but could additionally or alternatively be a flag, data value, register setting, etc. In some examples, each operational condition defined in the policy file 330 has at least one corresponding trigger (e.g., signal, flag, data value, etc.) indicative of that operational condition, which the telemetry collector 305 is to output when that operational condition is detected. If the detection of multiple operational conditions coincide (e.g., overlap, occur simultaneously, occur within a window of time of each other, etc.), the telemetry collector 305 outputs multiple triggers. The trigger output by the example telemetry collector 305 could be any form of communication to indicate an operational condition has occurred.

The example telemetry collector 305 of the illustrated example of FIG. 3 is implemented by a logic circuit such as, for example, a hardware processor. However, any other type of circuitry may additionally or alternatively be used such as, for example, one or more analog or digital circuit(s), logic circuits, programmable processor(s), application specific integrated circuit(s) (ASIC(s)), programmable logic device(s) (PLD(s)), field programmable logic device(s) (FPLD(s)), digital signal processor(s) (DSP(s)), Coarse Grained Reduced precision architecture (CGRA(s)), image signal processor(s) (ISP(s)), etc. Furthermore, the telemetry collector 305 may be implemented by software only (e.g. system software, application software, freeware, shareware, etc.), or any combination of software and circuitry mentioned above. The first set of telemetry data and the associated telemetry data timeline collected by the telemetry collector 305 can be stored in any memory, storage device and/or storage disc for storing data such as, for example, flash memory, magnetic media, optical media, solid state memory, hard drive(s), thumb drive(s), etc. Furthermore, the data collected by the telemetry collector 305 may be in any data format such as, for example, binary data, comma delimited data, tab delimited data, structured query language (SQL) structures, etc.

In the illustrated example of FIG. 3, the actuator 310 collects a second set of telemetry data based on instructions within the example policy file 330. In this example, the second set of telemetry data includes analysis data tailored to the operational condition detected by the telemetry collector 305. For example, if a UX-distress signal (e.g. corresponding to the mouse icon being depicted as a spinning wheel or applications being associated with "not responding" status) is asserted consecutively for more than a threshold or parameter of seconds, the example actuator 310 may access and execute instructions from the example policy file 330 for this operational condition to conduct a central processing unit (CPU) hot-spot analysis targeting the process owning the foreground window, the data from this analysis to be collected in the second set of telemetry data. As another example, if the moving average of the frames per second (FPS) measured for the foreground window drops under a threshold or parameter (e.g., FPS for a window displaying a video game presentation), the actuator 310 may access and execute instructions from the example policy file 330 for this operational condition to conduct a graphics processing unit (GPU) hot-spot analysis targeting the process owning the foreground window, the data from this analysis to be collected in the second set of telemetry data. As yet another example, if the moving average of the temperature measured for the CPU cores go above a threshold or parameter, the actuator 310 may access and execute instructions from the example policy file 330 for this operational condition to conduct a micro-architectural analysis, the data from this analysis to be collected in the second set of telemetry data.

CPU hot-spot analysis may include the amount of time a CPU spent executing one or more functions within program code, which can be used to determine if execution of the program code went as expected, and where future program code optimizations may be focused. GPU hot-spot analysis, similar to CPU hot-spot analysis, may include the amount of time a GPU spent executing one or more functions within program code, which can be used to determine if execution of the code went as expected, and where future code optimizations may be focused. CPU and GPU hot-spot analysis are used when there is known context that leads to where operational condition may be stemming from. System-wide micro-architectural analysis is used when there is no such context. This analysis analyzes the entire system, generating data that may provide a possible cause of the operational condition or where to spend additional resources to improve the functionality of the system.

The examples provided above are examples of operational conditions and the further analysis and/or measurements to be conducted by the actuator 310 in response to the example telemetry collector 305 detecting one of these operational conditions. According to the invention, if multiple detected operational conditions coincide (e.g., overlap, occur simultaneously, occur within a window of time of each other, etc.), the actuator 310 accesses and executes the policy file instructions for the operational conditions in an order specified in the policy file 330. In some alternative examples, the actuator 310 could collect analysis data for multiple operational conditions in parallel, both of which to be included in the second set of telemetry data. According to the invention, the actuator 310 collect a second and a third set of telemetry data, the second set of telemetry data to include analysis data from a first operational condition, the third set of telemetry data to include analysis data from a second operational condition.

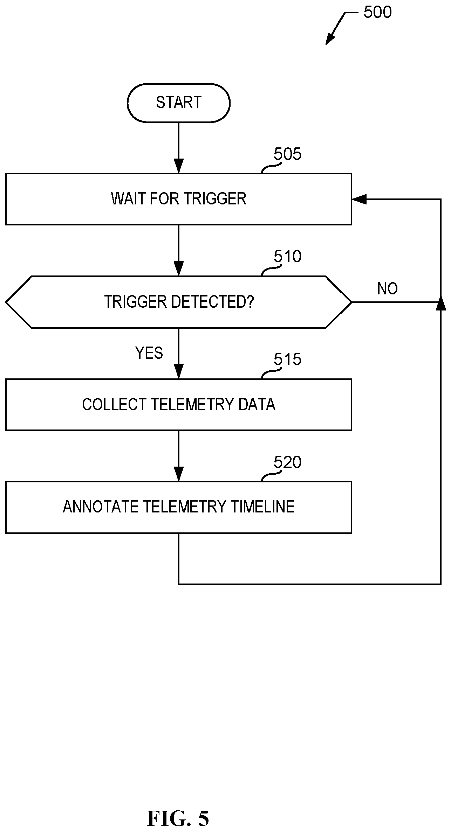

The actuator 310 of the illustrated example of FIG. 5 is implemented by a logic circuit such as, for example, a hardware processor. However, any other type of circuitry may additionally or alternatively be used such as, for example, one or more analog or digital circuit(s), logic circuits, programmable processor(s), ASIC(s), PLD(s), FPLD(s), programmable controller(s), GPU(s), DSP(s), CGRA(s), ISP(s), etc. The second set of telemetry data collected by the actuator 310 can be stored in any memory, storage device and/or storage disc for storing data such as, for example, flash memory, magnetic media, optical media, solid state memory, hard drive(s), thumb drive(s), etc. Furthermore, the data collected by the actuator 310 may be in any data format such as, for example, binary data, comma delimited data, tab delimited data, structured query language (SQL) structures, etc.

In the illustrated example of FIG. 5, the annotator 315 annotates the telemetry data timeline created by the example telemetry collector 305. The example annotator 315 annotates the telemetry data timeline in response to the example telemetry collector 305 detecting an operational condition. The annotation made by the annotator 315 on the telemetry data timeline can indicate the time at which the operational condition was detected, the time at which the operational condition was no longer detected, the length of the operational condition, the time at which the first or second sets of telemetry data began or concluded collection, and/or any other indications useful to establishing a timeline of events in the field. The example annotator 315 of the illustrated example of FIG. 3 is implemented by any memory, storage device and/or storage disc for storing data such as, for example, flash memory, magnetic media, optical media, solid state memory, hard drive(s), thumb drive(s), etc.

In the illustrated example of FIG. 3, the data reporter 320 reports the telemetry data timeline and the second set of telemetry data, to the example backend server 110. In some examples, the data reporter 320 reports one or more of the first data set, the second data set, and/or the telemetry data timeline. In some examples, the telemetry data timeline includes data from the first and second sets of telemetry data. In this example, the data reporter 320 uses an example network interface 220 to communicate data to the example backend server 110. The example data reporter 320 can omit data points from the first data set, the second data set, and/or the telemetry data timeline for the purpose of reducing the total amount of data reported to the example backend server 110. In some examples, the data reporter 320 omits data from the first data set, the second data set, and/or the telemetry data timeline to only include data points within a threshold period from the detection of an operational condition. In some examples, the example data reporter 320 waits for a report request from the example backend server 110 to report the first set of telemetry data, the second set of telemetry data, and/or the telemetry data timeline. In some examples, the example computing device 100 requests the data reporter 320 to report the first set of telemetry data, the second set of telemetry data, and/or the telemetry data timeline to be reported to the backend server 110. In some examples, the request to report data is generated via a user input (e.g. input from a mouse, keyboard, etc.) of the computing device 100. In some examples, the user of the computing device 100 requests the data reporter 320 to report the first set of telemetry data, the second set of telemetry data, and/or the telemetry data timeline to the backend server 110. However, any other method to determine when to report data could additionally or alternatively be used. Additionally, the example data reporter 320 may receive a request to report data from any component disclosed herein for the purpose to offloading data to a backend device. The example data reporter 320 of the illustrated example of FIG. 3 is implemented by a logic circuit such as, for example, a hardware processor. However, any other type of circuitry may additionally or alternatively be used such as, for example, one or more analog or digital circuit(s), logic circuits, programmable processor(s), ASIC(s), PLD(s), FPLD(s), programmable controller(s), GPU(s), DSP(s), CGRA(s), ISP(s), etc.

In the illustrated example of FIG. 3, the policy file updater 325 updates the example policy file 330 to reflect changes to the content of (e.g., instructions in) the policy file for specifying operational conditions, the respective data collection and analysis operations to be performed for corresponding, specified operational conditions, etc.. For example, an update in the policy file could include changing the threshold of consecutive seconds needed for a UX-distress signal (e.g. corresponding to the mouse icon being depicted as a spinning wheel or applications being associated with "not responding" status) to be consecutively held to detected as an operational condition. Another example of an update could include changing the threshold core temperature needed to trigger system-wide micro-architectural analysis. In some examples, the policy file updater 325 fetches a new, updated policy file 120 through the example network interface 220 from a backend server 110 and replaces the existing policy file 330 with the updated policy file 120. In some examples, the policy file updater 325 fetches a new, updated policy file 120 through the network interface 220 from a lab environment 115 and replaces the existing policy file 330 with the updated policy file 120. In some examples, the policy file updater 325 itself changes the instructions of the existing policy file 330 to reflect changes of content in the updated policy file 120. In some examples, the policy file updater 325 updates a portion of the existing policy file 330 with a portion of the updated policy file 120. However, any other method to implement the updated instructions to the policy file 120 and/or replace the existing example policy file 330 could additionally or alternatively be used. The updated policy file 120 and/or the existing policy file 330 could include any combination of changed instructions for definition of operational conditions, triggering logic, monitoring methods, and/or any other implementations mentioned herein.

While an example manner of implementing the telemetry monitoring tool of FIGS. 1-2 is illustrated in FIG. 3, one or more of the elements, processes and/or devices illustrated in FIG. 3 may be combined, divided, re-arranged, omitted, eliminated and/or implemented in any other way. Further, the example telemetry collector 305, the example actuator 310, the example annotator 315, the example data reporter 320, the example policy file updater 325, the example policy file 330, and/or, more generally, the example telemetry monitoring tool 125 of FIG. 1 may be implemented by hardware, software, firmware and/or any combination of hardware, software and/or firmware. Thus, for example, any of the example telemetry collector 305, the example actuator 310, the example annotator 315, the example data reporter 320, the example policy file updater 325, the example policy file 330, and/or more generally, the example telemetry monitoring tool 125 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example telemetry collector 305, the example actuator 310, the example annotator 315, the example data reporter 320, the example policy file updater 325, and/or the example policy file 330 is/are hereby expressly defined to include a non-transitory computer readable storage device or storage disk such as a memory, a digital versatile disk (DVD), a compact disk (CD), a Blu-ray disk, etc. including the software and/or firmware. Further still, the example telemetry monitoring tool 125 of FIG. 1 may include one or more elements, processes and/or devices in addition to, or instead of, those illustrated in FIG. 3, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

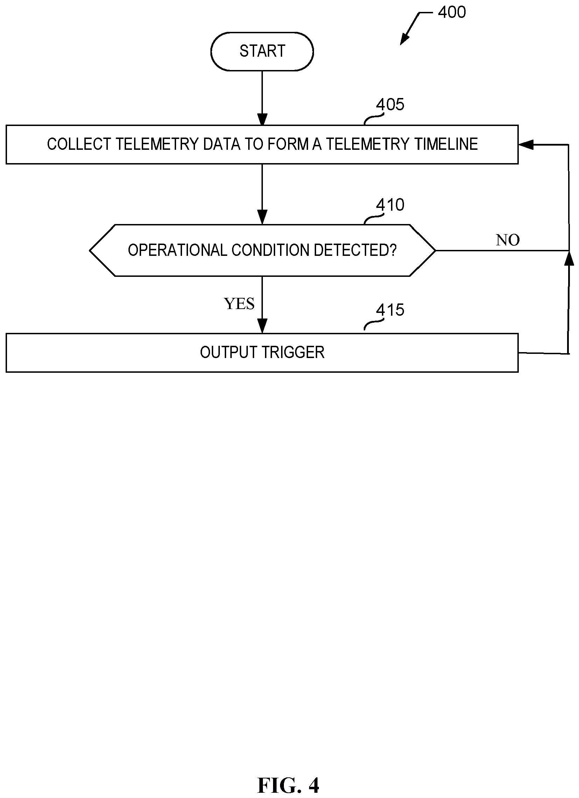

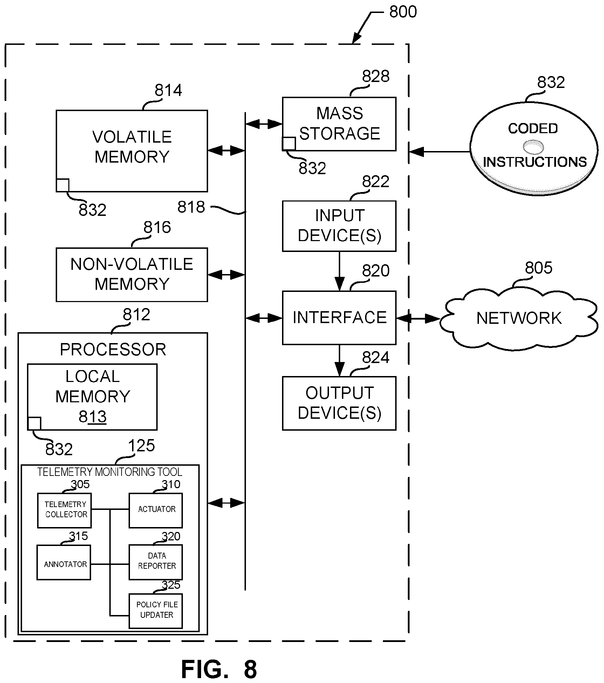

Flowcharts representative of example hardware logic, machine readable instructions, hardware implemented state machines, and/or any combination thereof for implementing the example telemetry monitoring tool 125 of FIGS. 1-3 are shown in FIGS. 4-6. The machine readable instructions may be one or more executable programs or portion(s) of an executable program for execution by a computer processor and/or processor circuitry, such as the processor 812 shown in the example processor platform 800 discussed below in connection with FIG. 8. The program may be embodied in software stored on a non-transitory computer readable storage medium such as a CD-ROM, a floppy disk, a hard drive, a DVD, a Blu-ray disk, or a memory associated with the processor 812, but the entire program and/or parts thereof could alternatively be executed by a device other than the processor 812 and/or embodied in firmware or dedicated hardware. Further, although the example program is described with reference to the flowchart illustrated in FIGS. 4-6, many other methods of implementing the example telemetry monitoring tool 125 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multicore processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), one or more shared objects, a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 4-6 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor.

FIG. 4 is a flowchart representative of example machine readable instructions 400 that, when executed, cause the example telemetry collector 305 to collect a first set of telemetry data to form a telemetry data timeline. The example machine readable instructions 400 of the illustrated example of FIG. 4 begins when the example telemetry collector 305 collects a first set of telemetry data to form a telemetry data timeline (block 405). In examples disclosed herein, the telemetry data collected to form a telemetry data timeline includes time-series system and application data. In this example, the telemetry collector 305 forms the telemetry data timeline as it collects the first set of telemetry data.

The example telemetry collector 305 then determines if an operational condition has been detected (block 410). A first example of an operational condition is a scenario in which a UX-distress signal is asserted consecutively for more than a threshold of seconds. A second example of an operational condition is a scenario in which a moving average of the frames per second (FPS) measured for a foreground window drops below a threshold. Yet another example of an operational condition is a scenario in which a moving average of the FPS measured for a CPU cores temperature goes above a threshold. If the example telemetry collector 305 determines that an operational condition has been detected (e.g. block 410 returns a result of YES), the example telemetry collector 305 outputs a trigger indicative of that operational condition and continues to collect telemetry data (block 415). If the example telemetry collector 305 determines that an operational condition has not occurred (e.g. block 410 returns a result of NO), the example telemetry collector 305 continues to collect telemetry data (block 405). In some examples, multiple operational conditions are detected coincidentally (e.g., overlap, occur simultaneously, occur within a window of time of each other, etc.). As a result, multiple triggers are output coincidentally and handled by the example actuator 310. Regardless of whether or not an operational condition is detected, the example telemetry collector 305 continuously collects telemetry data.

FIG. 5 is a flowchart representative of example machine readable instructions 500 that, when executed, cause the example actuator 310 to collect a second set of telemetry data. The example machine readable instructions 500 of the illustrated example of FIG. 5 begins when the example actuator 310 waits for a trigger from the example telemetry collector 305 (block 505).

The example actuator 310 then determines if it has detected a trigger signal (block 510). If the example actuator 310 has not detected a trigger (e.g. block 510 returns a result of NO), then the example actuator 310 continues to wait for a trigger (block 505). If the example actuator 310 has detected a trigger (e.g. block 510 returns a result of YES), the example actuator 510 then collects a second set of telemetry data (block 515). In examples discloses herein, instructions within the example policy file 330 dictate the collection of the second set of telemetry data. The policy file 330 indicates the measurements and/or analysis to be performed and collected in response to each specific trigger. These indicated measurements and/or analysis are targeted at gathering trigger-specific information crucial to environment recreation in the backend. However, any other approach of gathering information specific to a trigger may additionally or alternatively be used.

The example annotator 315 then annotates the telemetry data timeline created by the example telemetry collector 305 (Block 520). An example annotation made by the annotator on the telemetry data timeline could indicate the time at which a trigger was output by the example telemetry collector 305, the time at which the trigger was detected by the example actuator 310, the type of analysis performed or collected within the second data set, a list of applications running within the example processor platform 800 at the time the trigger was output or detected, or any other data specific to the complex environment of the example processor platform 800.

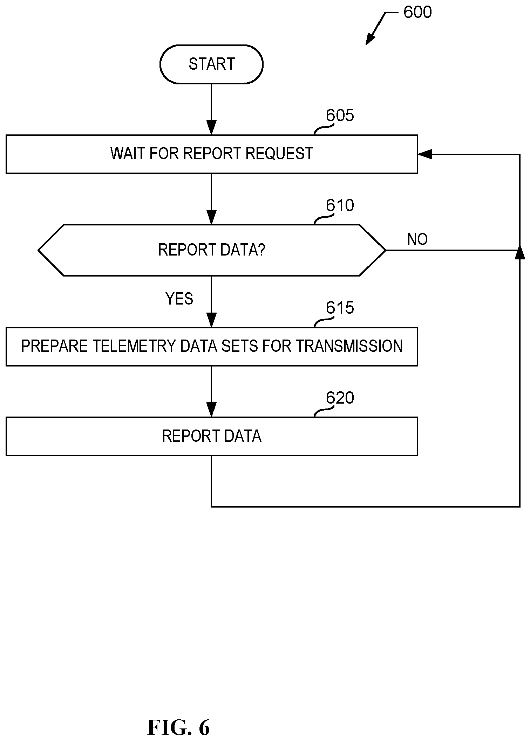

FIG. 6 is a flowchart representative of example machine readable instructions 600 that, when executed, cause the example data reporter 320 to report data to a backend sever. The example machine readable instructions 600 of the illustrated example of FIG. 6 begins when the example data reporter 320 waits for a report request (Block 605). In this example, the data reporter 320 waits for a report request from the example backend server 110. In some examples, the report request is generated manually (e.g. initiated by the user of the computing device). In some examples, the report request is generated automatically (e.g. generated by the computing device in response to detection of an operational condition).

The data reporter 320 then determines if it has detected a report request (block 610). If the data reporter 320 has not detected a request to report data (e.g. block 810 returns a result of NO), then the data reporter 320 continues to wait for a request to report data. (Block 605). If the data reporter 320 has received a request to report data (e.g. block 610 returns a result of YES), the data reporter 320 prepares the telemetry data timeline and second set of telemetry data to be reported (block 615). In some examples, the data reporter 320 omits data points within the telemetry data timeline to only include data within a threshold period relative to when an operational condition was detected. In some examples, the data reporter 320 omits data points within the second set of telemetry data to only include data points within a threshold period relative to when an operational condition was detected.

The data reporter 320 then reports the telemetry data timeline and second sets of telemetry data to the backend server 110 (block 620). In this example, the data reporter 320 interacts with an example network interface 220 to communicate with the backend server 110. However, any other approach of communicating data may additionally or alternatively be used. After the data has been reported, the example data reporter waits for a request to report data (block 605).

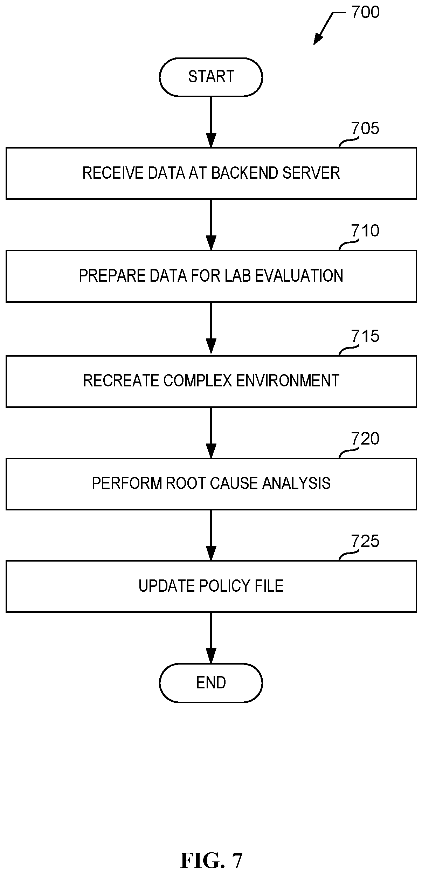

FIG. 7 is a flowchart representative of a testing procedure 700 that, when executed, enables the example lab environment 115 to perform root cause analysis and generate an updated policy file 120. The example testing procedure 700 of the illustrated example of FIG. 7 begins when the example backend server 110 receives the first and second sets of telemetry data (block 705).

The lab environment 115 is prepared to receive the first and second sets of telemetry data from the backend server 110 for lab evaluation (block 710). In some examples, preparing the data for lab evaluation includes reducing the total amount of data to reduce the amount of resources used during lab evaluation. In some examples, there is not enough data received from the backend server 110 for lab evaluation. In some examples, preparation for lab evaluation is not necessary, and the data remains unchanged.

The lab environment 115 is prepared to recreate the complex environment as seen in the field using the data prepared for lab analysis (block 715). The environment is recreated using the data received at the example backend server 110, which includes the first and second sets of telemetry collected by the example telemetry collector 305 and example actuator 310.

The lab environment 115 is prepared to perform root cause analysis using the recreated complex environment to determine the cause of the operational condition experienced in the field (block 720). Using the results of the root cause analysis, the lab environment 115 is prepared to generate an example updated policy file 120 containing updated instructions (block 725).

FIG. 8 is a block diagram of an example processor platform 800 structured to execute the instructions of FIGS. 4-6 to implement the telemetry monitoring tool of FIG. 3. The example processor platform 800 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The example processor platform 800 of the illustrated example includes a processor 812. The processor 812 of the illustrated example is hardware. For example, the processor 812 can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements the telemetry monitoring tool 125. In this example, the processor implements the telemetry collector 305 to collect a first set of telemetry data to be stored in local memory 813. In this example, the processor also contains trigger logic to detect an operational condition within the first set of telemetry data. The processor also to implement the actuator 310 by collecting a second set of telemetry data to be stored in local memory 813. In this example, the processor also annotates the first set of telemetry data, implementing the annotator 315. The example processor interacts with an interface circuit 820 and network 805 to report the telemetry data timeline and second data sets to the backend server 110, implementing the data reporter 320. The processor is able to receive updated policy files, implementing the policy file updater 325.

The processor 812 of the illustrated example includes a local memory 813 (e.g., a cache). The processor 812 of the illustrated example is in communication with a main memory including a volatile memory 814 and a non-volatile memory 816 via a bus 818. The volatile memory 814 may be implemented by Synchronous Dynamic Random Access Memory (SDRAM), Dynamic Random Access Memory (DRAM), RAMBUS^{®} Dynamic Random Access Memory (RDRAM^{®}) and/or any other type of random access memory device. The non-volatile memory 816 may be implemented by flash memory and/or any other desired type of memory device. Access to the main memory 814, 816 is controlled by a memory controller.

The example processor platform 800 of the illustrated example also includes an interface circuit 820. The interface circuit 820 may be implemented by any type of interface standard, such as an Ethernet interface, a universal serial bus (USB), a Bluetooth^{®} interface, a near field communication (NFC) interface, and/or a PCI express interface.

In the illustrated example, one or more input devices 822 are connected to the interface circuit 820. The input device(s) 822 permit(s) a user to enter data and/or commands into the processor 812. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 824 are also connected to the interface circuit 820 of the illustrated example. The output devices 824 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 820 of the illustrated example, thus, typically includes a graphics driver card, a graphics driver chip and/or a graphics driver processor.

The interface circuit 820 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 105. The communication can be via, for example, an Ethernet connection, a digital subscriber line (DSL) connection, a telephone line connection, a coaxial cable system, a satellite system, a line-of-site wireless system, a cellular telephone system, etc.

The example processor platform 800 of the illustrated example also includes one or more mass storage devices 828 for storing software and/or data. Examples of such mass storage devices 828 include floppy disk drives, hard drive disks, compact disk drives, Blu-ray disk drives, redundant array of independent disks (RAID) systems, and digital versatile disk (DVD) drives.

The coded instructions 832 of FIGS 4-6 may be stored in the mass storage device 828, in the volatile memory 814, in the non-volatile memory 816, in the local memory 813, and/or on a removable non-transitory computer readable storage medium such as a CD or DVD. Furthermore, the coded instructions 832 may correspond to the one or more elements to implement the example telemetry monitoring tool 125 described above.

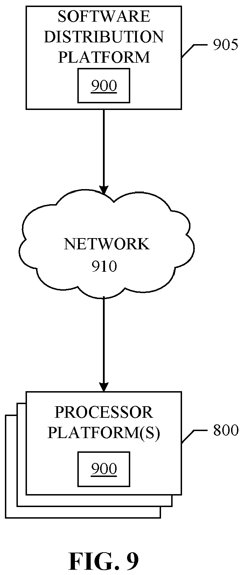

A block diagram illustrating an example software distribution platform 905 to distribute software such as the example computer readable instructions 832 of FIG. 8 to third parties is illustrated in FIG. 9. The example software distribution platform 905 may be implemented by any computer server, data facility, cloud service, etc., capable of storing and transmitting software to other computing devices. The third parties may be customers of the entity owning and/or operating the software distribution platform. For example, the entity that owns and/or operates the software distribution platform may be a developer, a seller, and/or a licensor of software such as the example computer readable instructions 832 of FIG. 8. The third parties may be consumers, users, retailers, OEMs, etc., who purchase and/or license the software for use and/or re-sale and/or sub-licensing. In the illustrated example, the software distribution platform 905 includes one or more servers and one or more storage devices. The storage devices store the computer readable instructions 832, which may correspond to the example computer readable instructions 125 of FIG. 3, as described above. The one or more servers of the example software distribution platform 905 are in communication with a network 910, which may correspond to any one or more of the Internet and/or any of the example networks 105 and/or 805 described above. In some examples, the one or more servers are responsive to requests to transmit the software to a requesting party as part of a commercial transaction. Payment for the delivery, sale and/or license of the software may be handled by the one or more servers of the software distribution platform and/or via a third party payment entity. The servers enable purchasers and/or licensors to download the computer readable instructions 832 from the software distribution platform 905. For example, the software, which may correspond to the example computer readable instructions 125 of FIG. 3, may be downloaded to the example processor platform 800, which is to execute the computer readable instructions 832 to implement the example telemetry monitoring tool 125. In some example, one or more servers of the software distribution platform 905 periodically offer, transmit, and/or force updates to the software (e.g., the example computer readable instructions 832 of FIG. 8) to ensure improvements, patches, updates, etc. are distributed and applied to the software at the end user devices.

From the foregoing, it will be appreciated that example methods, apparatus and articles of manufacture have been disclosed that allow device manufacturers and/or providers to collect improved telemetry data, enabling them to better understand operational conditions that occur in the field. Always collecting primary and secondary telemetry data would spend all the systems' resources on telemetry collection. Thus, the selective collection of secondary telemetry data allows all systems' resources to be focused on productive work as opposed to being used extensively on telemetry collection, reducing the resources necessary to obtain and report the telemetry data. Additionally, these device manufacturers and/or providers can use this better understanding to create products that minimize the impact of operational conditions in the field, which results in enhanced performance of overall systems. Furthermore, this tool can be licensed and implemented on several platforms allowing for licensed companies to better understand operational conditions that occur on their computing devices. The disclosed methods, apparatus and articles of manufacture allow for the complex environment seen in the field to be recreated in a lab setting for further root cause analysis. The resulting analysis gives manufacturers/providers an improved understanding of operational conditions in the field, thus increasing the efficiency and scalability future technologies. The disclosed methods, apparatus and articles of manufacture are accordingly directed to one or more improvement(s) in the functioning of a computer.

Although certain example methods, apparatus and articles of manufacture have been disclosed herein, the scope of coverage of this patent is not limited thereto. On the contrary, this patent covers all methods, apparatus and articles of manufacture falling within the scope of the claims of this patent.

## Claims

1. An apparatus (100) configured to perform telemetry monitoring, the apparatus comprising:
a telemetry collector (305) configured to:
collect a first set of telemetry data to form a telemetry data timeline associated with a computing device, the first set of telemetry data collected based on a policy file;
generate a first trigger indicative of a first operational condition specified in the policy file; and
generate a second trigger indicative of a second operational condition that coincides with the first operational condition;
an actuator (310) configured to:
collect a second set of telemetry data associated with the computing device in response to the first trigger; and
collect a third set of telemetry data associated with the computing device in response to the second trigger, wherein the second and third sets of telemetry data are collected based on an order specified in the policy file; and
a data reporter (320) configured to report the telemetry data timeline, the second set of telemetry data, and the third set of telemetry data to a server, in response to a request,
wherein the second set of telemetry data includes at least one of: graphics processing unit, GPU, hot-spot analysis data, or micro-architectural analysis data.

2. The apparatus of claim 1, further including an annotator configured to annotate the telemetry data timeline with an annotation to indicate a time at which the operational condition was detected.

3. The apparatus of any one of claims 1 to 2, wherein the request is generated via a user input of the computing device.

4. The apparatus of any one of claims 1 to 2, wherein the request is generated automatically by the computing device.

5. The apparatus of any one of claims 1 to 4, wherein the policy file is a first policy file, and further including a policy file updater to:
retrieve a second policy file from a server; and
replace the first policy file with the second policy file.

6. A method (400, 500, 600) comprising:
collecting (405), with at least one processor, a first set of telemetry data to form a telemetry data timeline associated with a computing device, the first set of telemetry data collected based on a policy file;
generating (415) a first trigger indicative of a first operational condition specified in the policy file;
generating a second trigger indicative of a second operational condition that coincides with the first operational condition;
collecting (515), with the at least one processor, a second set of telemetry data associated with the computing device in response to the first trigger;
collecting, with the at least one processor, a third set of telemetry data associated with the computing device in response to the second trigger, wherein the collection of the second and third sets of telemetry data are based on an order specified in the policy file; and
reporting (620) the telemetry data timeline, the second set of telemetry data, and the third set of telemetry data to a server, in response to a request,
wherein the second set of telemetry data includes at least one of: graphics processing unit, GPU, hot-spot analysis data, or micro-architectural analysis data.

7. The method of claim 6, further including annotating the telemetry data timeline with an annotation indicating a time at which the first operational condition was detected.

8. The method of any one of claims 6 to 7, wherein the request is generated via a user input of the computing device.

9. The method of any one of claims 6 to 7, wherein the request is generated automatically by the computing device.

10. The method of any one of claims 6 to 9, wherein the policy file is a first policy file, and further including:
retrieving a second policy file from a server; and
replacing the first policy file with the second policy file.

11. At least one computer readable medium comprising instructions that, when executed, cause at least one processor to implement the method as claimed in any of claims 6 to 10.

## Patentansprüche

1. Vorrichtung (100), die dazu ausgelegt ist, eine Telemetrieüberwachung durchzuführen, wobei die Vorrichtung umfasst:
einen Telemetriesammler (305), der dazu ausgelegt ist:
einen ersten Satz von Telemetriedaten zu sammeln, um eine einer Rechenvorrichtung zugeordnete Telemetriedaten-Zeitleiste zu bilden, wobei der erste Satz von Telemetriedaten basierend auf einer Richtliniendatei gesammelt wird;
einen ersten Auslöser zu erzeugen, der für einen ersten betreibbaren Vorgang kennzeichnend ist, der in der Richtliniendatei vorgegeben ist; und
einen zweiten Auslöser zu erzeugen, der für einen zweiten betreibbaren Vorgang kennzeichnend ist, der mit dem ersten Vorgang zusammenfällt;
ein Stellglied (310), das dazu ausgelegt ist:
einen zweiten Satz von Telemetriedaten, die der Rechenvorrichtung zugeordnet sind, als Reaktion auf den ersten Auslöser zu sammeln; und
einen dritten Satz von Telemetriedaten, die der Rechenvorrichtung zugeordnet sind, als Reaktion auf den zweiten Auslöser zu sammeln, wobei die zweiten und dritten Sätze von Telemetriedaten basierend auf einer in der Richtliniendatei vorgegebenen Reihenfolge gesammelt werden; und
einen Datenberichterstatter (320), der dazu ausgelegt ist, als Reaktion auf eine Anforderung die Telemetriedaten-Zeitleiste, den zweiten Satz von Telemetriedaten und den dritten Satz von Telemetriedaten an einen Server zu berichten,
wobei der zweite Satz von Telemetriedaten beinhaltet: eine Grafikverarbeitungseinheit-Hot-Spot-Analysedaten, GPU-Hot-Spot-Analysedaten und/oder mikroarchitektonische Analysedaten.

2. Vorrichtung nach Anspruch 1, die ferner einen Annotator beinhaltet, der dazu ausgelegt ist, die Zeitleiste der Telemetriedaten mit einer Annotation zu annotieren, um eine Zeit anzugeben, zu der der betreibbare Zustand erkannt wurde.

3. Vorrichtung nach einem der Ansprüche 1 bis 2, wobei die Anforderung über eine Benutzereingabe der Berechnungsvorrichtung erzeugt wird.

4. Vorrichtung nach einem der Ansprüche 1 bis 2, wobei die Anforderung automatisch durch die Berechnungsvorrichtung erzeugt wird.

5. Vorrichtung nach einem der Ansprüche 1 bis 4, wobei die Richtliniendatei eine erste Richtliniendatei ist und ferner einen Aktualisierer für die Richtliniendatei beinhaltet, um:
eine zweite Richtliniendatei von einem Server abzurufen; und
die erste Richtliniendatei durch die zweite Richtliniendatei zu ersetzen.

6. Verfahren (400, 500, 600), die umfasst:
Sammeln (405), mit zumindest einem Prozessor, eines ersten Satzes von Telemetriedaten, um eine einer Rechenvorrichtung zugeordnete Telemetriedaten-Zeitleiste zu bilden, wobei der erste Satz von Telemetriedaten basierend auf einer Richtliniendatei gesammelt wird;
Erzeugen (415) eines ersten Auslösers, der für einen ersten betreibbaren Vorgang kennzeichnend ist, der in der Richtliniendatei vorgegeben ist;
Erzeugen eines zweiten Auslösers, der für einen zweiten betreibbaren Vorgang kennzeichnend ist, der mit dem ersten Vorgang zusammenfällt;
Sammeln (515) eines zweiten Satzes von Telemetriedaten, die der Computervorrichtung zugeordnet sind, mit dem mindestens einen Prozessor als Reaktion auf den ersten Auslöser;
Sammeln eines dritten Satzes von Telemetriedaten, die der Rechenvorrichtung zugeordnet sind, mit dem mindestens einen Prozessor als Reaktion auf den zweiten Auslöser, wobei das Sammeln des zweiten und dritten Satzes von Telemetriedaten auf einer in der Richtliniendatei vorgegebenen Reihenfolge basiert; und
Berichten (620) der Telemetriedaten-Zeitleiste, des zweiten Satzes von Telemetriedaten und des dritten Satzes von Telemetriedaten an einen Server als Reaktion auf eine Anforderung,
wobei der zweite Satz von Telemetriedaten beinhaltet: eine Grafikverarbeitungseinheit-Hot-Spot-Analysedaten, GPU-Hot-Spot-Analysedaten und/oder mikroarchitektonische Analysedaten.

7. Verfahren nach Anspruch 6, das ferner das Annotieren der Zeitleiste der Telemetriedaten mit einer Annotation beinhaltet, die eine Zeit angibt, zu der der erste betreibbare Zustand erkannt wurde.

8. Verfahren nach einem der Ansprüche 6 bis 7, wobei die Anforderung über eine Benutzereingabe der Berechnungsvorrichtung erzeugt wird.

9. Verfahren nach einem der Ansprüche 6 bis 7, wobei die Anforderung automatisch durch die Berechnungsvorrichtung erzeugt wird.

10. Verfahren nach einem der Ansprüche 6 bis 9, wobei die Richtliniendatei eine erste Richtliniendatei ist, und ferner beinhaltet:
Abrufen einer zweiten Richtliniendatei von einem Server; und
Ersetzen der erste Richtliniendatei durch die zweite Richtliniendatei.

11. Mindestens ein computerlesbares Medium, das Anweisungen umfasst, die, wenn sie ausgeführt werden, mindestens einen Prozessor veranlassen, das Verfahren nach einem der Ansprüche 6 bis 10 zu implementieren.

## Revendications

1. Appareil (100) configuré pour exécuter une surveillance de télémétrie, l'appareil comprenant :
un collecteur de télémétrie (305) configuré pour:
collecter un premier ensemble de données de télémétrie pour former une chronologie de données de télémétrie associée à un dispositif informatique, le premier ensemble de données de télémétrie est collecté sur la base d'un fichier de règles ;
générer un premier déclencheur indicatif d'un premier état opérationnel spécifié dans le fichier de règles ; et
générer un deuxième déclencheur indicatif d'un deuxième état opérationnel qui coïncide avec le premier état opérationnel ;
un actionneur (310) configuré pour :
collecter un deuxième ensemble de données de télémétrie associé au dispositif informatique en réponse au premier déclencheur ; et
collecter un troisième ensemble de données de télémétrie associé au dispositif informatique en réponse au deuxième déclencheur, dans lequel les deuxième et troisième ensembles de données de télémétrie sont collectés sur la base d'un ordre spécifié dans le fichier de règles ; et un reporteur de données (320) configuré pour reporter la chronologie de données de télémétrie, le deuxième ensemble de données de télémétrie et le troisième ensemble de données de télémétrie à un serveur, en réponse à une demande,
dans lequel le deuxième ensemble de données de télémétrie comprend au moins un élément parmi : une unité de traitement graphique, GPU, des données d'analyse de points chauds ou des données d'analyse micro-architecturale.

2. Appareil selon la revendication 1, comprenant en outre un annotateur configuré pour annoter la chronologie de données de télémétrie avec une annotation pour indiquer un temps auquel l'état opérationnel a été détecté.

3. Appareil selon l'une quelconque des revendications 1 à 2, dans lequel la demande est générée par l'intermédiaire d'une entrée d'utilisateur du dispositif informatique.

4. Appareil selon l'une quelconque des revendications 1 à 2, dans lequel la demande est générée automatiquement par le dispositif informatique.

5. Appareil selon l'une quelconque des revendications 1 à 4, dans lequel le fichier de règles est un premier fichier de règles, et comprenant en outre un dispositif de mise à jour de fichier de règles pour :
récupérer un deuxième fichier de règles à partir d'un serveur ; et
remplacer le premier fichier de règles par le deuxième fichier de règles.

6. Procédé (400, 500, 600) comprenant les étapes suivantes :
la collecte (405), à l'aide d'au moins un processeur, d'un premier ensemble de données de télémétrie pour former une chronologie de données de télémétrie associée à un dispositif informatique, le premier ensemble de données de télémétrie est collecté sur la base d'un fichier de règles ;
la génération (415) d'un premier déclencheur indicatif d'un premier état opérationnel spécifié dans le fichier de règles ;
la génération d'un deuxième déclencheur indicatif d'un deuxième état opérationnel qui coïncide avec le premier état opérationnel ;
la collecte (515), à l'aide de l'au moins un processeur, d'un deuxième ensemble de données de télémétrie associé au dispositif informatique en réponse au premier déclencheur ;
la collecte, à l'aide de l'au moins un processeur, d'un troisième ensemble de données de télémétrie associé au dispositif informatique en réponse au deuxième déclencheur, dans lequel la collecte des deuxième et troisième ensembles de données de télémétrie sont basés sur un ordre spécifié dans le fichier de règles ; et
le report (620) de la chronologie de données de télémétrie, du deuxième ensemble de données de télémétrie et du troisième ensemble de données de télémétrie à un serveur, en réponse à une demande,
dans lequel le deuxième ensemble de données de télémétrie comprend au moins un élément parmi : une unité de traitement graphique, GPU, des données d'analyse de points chauds ou des données d'analyse micro-architecturale.

7. Procédé selon la revendication 6, comprenant en outre l'annotation de la chronologie de données de télémétrie avec une annotation indiquant un temps auquel le premier état opérationnel a été détecté.

8. Procédé selon l'une quelconque des revendications 6 à 7, dans lequel la demande est générée par l'intermédiaire d'une entrée d'utilisateur du dispositif informatique.

9. Procédé selon l'une quelconque des revendications 6 à 7, dans lequel la demande est générée automatiquement par le dispositif informatique.

10. Procédé selon l'une quelconque des revendications 6 à 9, dans lequel le fichier de règles est un premier fichier de règles, et comprenant en outre :
la récupération d'un deuxième fichier de règles à partir d'un serveur ; et
le remplacement du premier fichier de règles par le deuxième fichier de règles.

11. Au moins un support lisible par ordinateur comportant des instructions qui, lorsqu'elles sont exécutées, amènent au moins un processeur à mettre en œuvre le procédé selon l'une quelconque des revendications 6 à 10.
